(19) Europäisches Patentamt
European Patent Office
Office européen des brevets

(11) **EP 4 118 616 B1**

(12) **FASCICULE DE BREVET EUROPEEN**

(45) Date de publication et mention de la délivrance du brevet:
**27.08.2025 Bulletin 2025/35**

(21) Numéro de dépôt: **21710288.8**

(22) Date de dépôt: **09.03.2021**

(51) Classification Internationale des Brevets (IPC):
***G06T 7/00*** *(2017.01)*

(52) Classification Coopérative des Brevets (CPC):
**G06T 7/0004;** G06T 2207/10048; G06T 2207/20081

(86) Numéro de dépôt international:
**PCT/EP2021/055924**

(87) Numéro de publication internationale:
**WO 2021/180726 (16.09.2021 Gazette 2021/37)**

(54) **PROCÉDÉ ET SYSTÈME DE CONTRÔLE NON DESTRUCTIF D'UNE PIÈCE AÉRONAUTIQUE**

VERFAHREN UND SYSTEM ZUR ZERSTÖRUNGSFREIEN PRÜFUNG EINER AERONAUTISCHEN KOMPONENTE

METHOD AND SYSTEM FOR THE NON-DESTRUCTIVE INSPECTION OF AN AERONAUTICAL COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2020 FR 2002497**

(43) Date de publication de la demande:
**18.01.2023 Bulletin 2023/03**

(73) Titulaire: **SAFRAN**
**75015 Paris (FR)**

(72) Inventeur: **HUCK, Alexis, Reynald, Paul**
**77550 MOISSY-CRAMAYEL (FR)**

(74) Mandataire: **Argyma**
**14 Boulevard de Strasbourg**
**31000 Toulouse (FR)**

(56) Documents cités:
CN-A- 110 322 429    US-A1- 2005 008 215
US-B1- 9 519 844    US-B2- 10 546 207
US-B2- 8 287 183

**Description**

**Domaine technique**

L'invention concerne le domaine général de l'aéronautique. Elle concerne plus particulièrement le contrôle non destructif par thermographie infrarouge active de pièces aéronautiques, telles que des pièces à géométrie complexe équipant des moteurs d'aéronef comme par exemple des structures internes fixes (ou IFS pour Inner Fixed Structures) ou autres structures sandwiches composites d'inverseurs de poussée. Aucune limitation n'est attachée toutefois au type de pièce aéronautique considérée ni au matériau dans laquelle cette pièce est composée, il peut s'agir indifféremment d'un matériau composite ou non.

De manière connue, on désigne par contrôle non destructif un ensemble de méthodes qui permettent de caractériser l'état d'intégrité et/ou la qualité de structures ou de matériaux sans les dégrader. Le contrôle non destructif a une application privilégiée mais non limitative dans le domaine de l'aéronautique, et plus généralement dans n'importe quel domaine dans lequel les structures dont on souhaite caractériser l'état ou la qualité sont coûteuses et/ou leur fiabilité de fonctionnement est critique. Le contrôle non destructif peut être avantageusement réalisé sur la structure ou le matériau considéré aussi bien en cours de production qu'en cours d'utilisation ou de maintenance.

La thermographie active, ou thermographie infrarouge active, est une des techniques connues utilisées pour réaliser des contrôles non destructifs dans le domaine de l'aéronautique. Elle s'appuie en premier lieu sur une excitation contrôlée de la pièce considérée. Cette excitation conduit à un changement d'état thermique de la pièce (par exemple à une augmentation instantanée de la température surfacique de la pièce de plusieurs degrés dans le cas où la source d'excitation est une lampe flash). Par ailleurs, on observe au moyen d'une caméra infrarouge, l'évolution de la température à la surface de la pièce (par exemple la décroissance progressive de la température à la surface de la pièce dans le cas d'une excitation par lampe flash). La caméra infrarouge fournit une séquence temporelle d'images thermiques numériques représentant à différents instants la température en différents points de la surface de la pièce. Par exemple, chaque image numérique est une image codée en niveaux de gris sur laquelle chaque pixel associé à un point de la pièce a un niveau de gris représentatif d'une fonction croissante de la température en ce point à l'instant de l'acquisition de l'image numérique. L'observation de la séquence temporelle d'images thermiques numériques fournies par la caméra infrarouge permet de détecter la présence d'anomalies dans l'évolution de la température à la surface de la pièce qui seraient causées par des défauts inhérents à la pièce (ex. vides, inclusions, etc.) et qui perturberaient la diffusion de la chaleur de la surface vers l'intérieur de la pièce.

Le contrôle non destructif complet d'une pièce de grande dimension (plusieurs mètres carrés typiquement pour une structure IFS par exemple) nécessite en pratique de mener plusieurs acquisitions « unitaires » de séquences temporelles d'images thermiques pour couvrir l'ensemble de la surface de celle-ci, chaque acquisition unitaire portant sur une zone d'acquisition dite unitaire différente de la pièce. La juxtaposition des zones unitaires permet ainsi d'obtenir une représentation de la pièce dans son ensemble, moyennant la prise en compte d'une zone de recouvrement éventuelle entre chaque acquisition unitaire.

Afin de détecter la présence d'anomalies dans une zone unitaire de la pièce aéronautique à partir de la séquence temporelle d'images thermiques numériques de la zone unitaire, il a été proposé de former une image de caractéristiques de la zone unitaire qui associe à chaque pixel de l'image un vecteur de caractéristiques, en particulier, des valeurs de dérivées.

Il a été proposé par la demande de brevet FR3071611 un procédé permettant d'estimer les dérivées d'ordre 1 et/ou d'ordre 2 du logarithme naturel de la température, et d'utiliser les dérivées ainsi estimées comme vecteur de caractéristiques pour déterminer la présence ou non d'un défaut dans la pièce de matériau considérée. Pour estimer les dérivées susmentionnées, l'état de la technique convertit tout d'abord, au moyen d'une fonction logarithme naturel, les écarts d'amplitudes des pixels (par rapport à l'amplitude à l'équilibre évaluée à partir des images acquises avant l'excitation) des images numériques fournies par la caméra infrarouge ainsi que les instants auxquels ces images numériques ont été acquises, l'origine du temps étant attribuée à l'instant de l'excitation.

Le procédé de contrôle permet de définir et d'estimer des paramètres santé qui sont homogènes, malgré l'hétérogénéité d'acquisition et les dérivées peuvent être estimées selon un schéma d'échantillonnage temporel dédié et fixé pour toutes les zones unitaires. Néanmoins, certaines zones unitaires sont peu épaisses, donc associées à des temps d'acquisition plus faibles, et les instants d'estimation « temps longs » ne sont pas estimés. Cela induit une hétérogénéité résiduelle : les pixels caractéristiques des différentes zones unitaires peuvent ne pas avoir les mêmes dimensions.

Ainsi, de manière connue, un procédé de contrôle non destructif d'une pièce aéronautique comprend :

- une étape d'obtention, au moyen d'un système de thermographie infrarouge active, d'une pluralité d'images numériques de chaque zone unitaire de la pièce aéronautique acquises à une pluralité d'instants d'acquisition définis sur une période de temps déterminée dite période d'acquisition, chaque pixel d'une image numérique acquise à un instant d'acquisition ayant une amplitude à cet instant d'acquisition en un point de la pièce aéronautique ;

- une étape d'estimation, à partir des images numériques acquises de la zone unitaire, d'au moins un vecteur de caractéristiques pour chaque pixel de ladite zone unitaire, de manière à former une image de caractéristiques représentative de la zone unitaire et
- une étape d'annotation, à partir de l'image de caractéristiques, d'un indice d'anormalité de chaque pixel de chaque zone unitaire de la pièce aéronautique.

En pratique, les pièces aéronautiques peuvent en outre être hétérogènes, dans le sens où les propriétés thermiques du matériau qui les composent peuvent varier spa-tialement notamment avec la présence de défauts, et peuvent avoir des géométries complexes. Plusieurs paramètres d'acquisition des images thermiques de telles pièces peuvent ainsi être amenés à varier, notamment d'une zone unitaire à l'autre lorsque plusieurs acquisitions unitaires sont nécessaires pour recouvrir une grande pièce dans son ensemble. Si les conditions d'acquisition sont modifiées entre deux zones unitaires adjacentes, ce qui peut s'avérer pertinent lorsque ces zones ont des épaisseurs différentes, il est complexe de déterminer l'indice d'anormalité de chaque pixel de chaque zone unitaire de la pièce. Cette difficulté d'interprétation empêche d'automatiser l'interprétation des vecteurs de caractéristiques.

Aussi, en pratique, pour déterminer l'indice d'anormalité d'une zone unitaire, l'opérateur utilise un dispositif de détection qui permet de visualiser une interprétation graphique de l'image de caractéristiques afin de détecter la présence éventuelle d'anomalies sur la pièce aéronautique, de positionner le cas échéant cette anomalie sur la surface de ladite zone unitaire de la pièce et éventuellement d'évaluer la profondeur de l'anomalie. Ce dispositif de détection est configuré pour donner des informations intelligibles à l'opérateur pour l'aider à une prise de décision quant à l'intégrité de la pièce aéronautique.

Une détermination visuelle de l'indice d'anormalité d'une zone unitaire est chronophage, requiert une attention importante et varie d'un opérateur à un autre. Ces inconvénients sont par ailleurs multipliés par le fait qu'une pièce aéronautique peut comprendre plusieurs centaines de zones unitaires.

L'invention vise ainsi à éliminer au moins certains de ces inconvénients en proposant un procédé de contrôle non destructif dont l'étape d'annotation soit au moins en partie automatique de manière à réduire le temps de détermination de l'indice d'anormalité d'une zone unitaire tout en améliorant le degré de pertinence.

On connaît dans l'art antérieur par les documents US2005/008215A1, CN110322429A, US10546207B2, US9519844B1, US8287183B2 des méthodes dans lesquelles une signature caractéristique d'un pixel, déterminée à partir d'une signature de référence, est comparée à une signature caractéristique statique sans tenir compte d'une éventuelle variabilité, ni dans la signature de référence, ni dans la métrique comparant la signature testée et la signature de référence. Les enseignements des documents précédents ne sont pertinents que si l'empilement de matériaux de la pièce est homogène radialement.

## PRESENTATION DE L'INVENTION

L'invention concerne un procédé de contrôle non destructif d'une pièce aéronautique selon la revendication 1.

De préférence, la micro-zone de prédiction est entièrement incluse dans la micro-zone d'apprentissage.

L'architecture de modèles locaux par zone unitaire et par micro-zone de prédiction permet de réaliser une prédiction qui est très pertinente étant donné, qu'à l'échelle d'une micro-zone de prédiction, la pièce est sensiblement homogène. Par ailleurs, du fait de cette homogénéité, le modèle local comporte peu de paramètres et est ainsi simple et rapide à mettre en œuvre, ce qui accélère la détermination de l'indice d'anormalité de chaque pixel. De manière avantageuse, cela permet de définir un modèle local avec une base d'apprentissage comportant un nombre réduit d'échantillons. L'apprentissage est alors accéléré. De plus, les modèles locaux peuvent être appris en parallèle. L'utilisation d'une micro-zone d'apprentissage dans laquelle la micro-zone de prédiction est incluse permet de réduire l'incertitude positionnelle liée à l'acquisition des images numériques de la pièce. Cela permet avantageusement de lisser les effets liés à l'acquisition et les transitions entre les micro-zones de prédiction. Le procédé possède ainsi une robustesse améliorée. Grâce à l'invention, on peut modéliser des matériaux hétérogènes et on peut observer des zones de transition entre deux matériaux sains.

De préférence, le procédé comporte une étape de comparaison de l'indice d'anormalité de chaque pixel de chaque micro-zone de prédiction à un seuil prédéterminé afin de former un masque binaire de prédiction de ladite zone unitaire. Un tel masque binaire de prédiction est simple à interpréter par un opérateur.

De manière préférée, chaque micro-zone de prédiction est centrée par rapport à la micro-zone d'apprentissage dans laquelle elle est incluse. Cela permet avantageusement, de réaliser un lissage des vecteurs de caractéristiques qui est homogène à la périphérie de la micro-zone de prédiction. Les transitions entre les micro-zones de prédiction sont alors améliorées.

De préférence, chaque micro-zone de prédiction possède une dimension inférieure à la dimension de la micro-zone d'apprentissage dans laquelle elle est incluse. Ainsi, une telle dimension de la micro-zone d'apprentissage permet de réduire de manière optimale les effets de bord pour lisser les effets liés à l'acquisition et les transitions entre les micro-zones de prédiction. De manière avantageuse, les pixels d'une micro-zone de prédiction servent non seulement à l'apprentissage du modèle local correspondant mais aussi à l'apprentissage des modèles locaux des micro-zones voisines/ juxtaposées.

De préférence, la micro-zone de prédiction et la micro-zone d'apprentissage sont concentriques. De préférence encore, la micro-zone de prédiction possède un premier rayon et la micro-zone d'apprentissage possède un deuxième rayon qui est supérieur ou égal à deux fois le premier rayon. Autrement dit, il existe une marge entre la micro-zone de prédiction et la micro-zone d'apprentissage qui est supérieure ou égale au premier rayon. De préférence, la marge est égale au premier rayon.

De manière préférée, l'algorithme d'apprentissage est un algorithme statistique incrémental de manière à permettre une mise à jour dynamique. Par incrémental, on entend que les échantillons de donnée contribuant à l'apprentissage sont parcourus séquentiellement et que chaque échantillon de donnée n'est parcouru qu'une fois dans le processus d'apprentissage d'un modèle local. Cela permet avantageusement de pouvoir fournir de nouveaux échantillons suite à l'apprentissage pour améliorer les modèles locaux. De préférence encore, l'algorithme d'apprentissage est un algorithme statistique du type FISVDD. Pour ce type d'algorithme statistique, la complexité algorithmique d'apprentissage est proportionnelle à S2 où S est le nombre de vecteurs supports qui déterminent le modèle local. Du fait du faible nombre de vecteurs support (liée à l'homogénéité locale), l'algorithme statistique du type FISVDD est accéléré. La complexité de gestion de la mémoire est également réduite ce qui permet d'accélérer le procédé en parallélisant les apprentissages de plusieurs modèles locaux avec des ressources techniques déterminées (mémoire, puissance de calcul,...).

De préférence, au cours de l'étape d'obtention, la pièce aéronautique est positionnée de manière fixe et un dispositif d'acquisition du système de thermographie infrarouge active est déplacé pour acquérir une pluralité d'images numériques de chaque zone unitaire, en particulier sous forme d'une vidéo. De manière préférée, pour chaque position du système d'acquisition correspondant à chaque zone unitaire, le dispositif d'acquisition permet d'acquérir une vidéo numérique comportant une pluralité d'images numériques.

De manière préférée, le procédé comporte une étape d'analyse de la micro-carte d'anormalité par un opérateur, une étape d'annotation de la micro-zone de prédiction si elle est contient des pixels suspects au sens de la prédiction algorithmique par ledit opérateur et une étape de mise à jour du modèle local de ladite micro-zone de prédiction à partir de ladite micro-zone de prédiction annotée et de l'algorithme d'apprentissage et une étape de mise à jour du modèle local à partir de la détermination de l'indice d'anormalité de la micro-zone de prédiction.

Ainsi, de manière avantageuse, un modèle local peut être mis à jour dynamiquement de manière incrémentale lors de la mise en œuvre du procédé de contrôle.

L'invention concerne également un système de contrôle non destructif d'une pièce aéronautique selon la revendication 10.

L'invention vise aussi un programme d'ordinateur sur un support d'informations ou d'enregistrement, ce programme étant susceptible d'être mis en œuvre dans un dispositif d'estimation, un dispositif de détection ou plus généralement dans un ordinateur, ce programme comportant des instructions adaptées à la mise en œuvre de l'étape de partition du procédé de contrôle non destructif tel que décrit ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

[Fig.1] La [Fig.1] est une représentation schématique d'un système de contrôle non destructif selon une forme de réalisation de l'invention ;

[Fig.2] La [Fig.2] est une représentation schématique des zones unitaires d'acquisition d'une pièce aéronautique ;

[Fig.3] La [Fig.3] est une représentation schématique de la formation d'une image de caractéristiques à partir d'une pluralité d'images numériques temporelles ;

[Fig.4] La [Fig.4] est une représentation schématique des étapes du procédé de contrôle non destructif ;

[Fig.5A] La [Fig.5A] est une représentation schématique d'une étape de partition d'une image de caractéristiques en micro-zones de prédiction ;

[Fig.5B] La [Fig.5B] est une représentation schématique d'une base de données de modèles locaux ;

[Fig.6] La [Fig.6] est une représentation schématique d'une étape de comparaison afin de déterminer un indice d'anormalité d'un pixel d'une micro-zone de prédiction ;

[Fig.7] La [Fig.7] est une représentation schématique de la mise en œuvre d'un procédé de prédiction ;

[Fig.8] La [Fig.8] est une représentation schématique d'un masque binaire de prédiction de plusieurs micro-zones de prédiction d'une zone unitaire ;

[Fig.9] La [Fig.9] est une représentation schématique de la mise en œuvre d'un procédé d'apprentissage d'un modèle local ;

[Fig.10] La [Fig.10] est une représentation schématique de l'obtention d'un modèle local à partir d'une pluralité de micro-zones d'apprentissage ;

[Fig.11] La [Fig.11] est une représentation schématique d'une micro-zone de prédiction associée à une micro-zone d'apprentissage ;

[Fig.12A]

[Fig.12B]

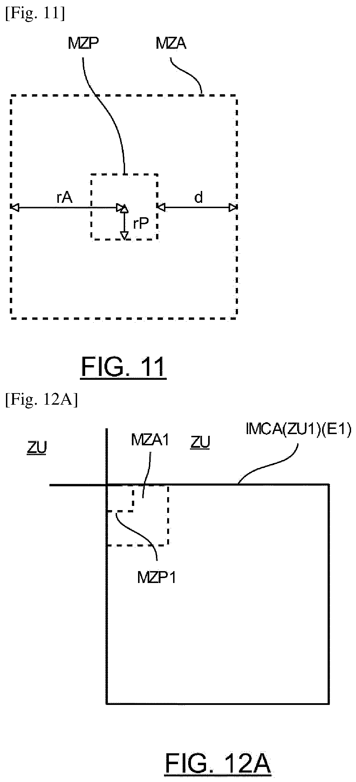

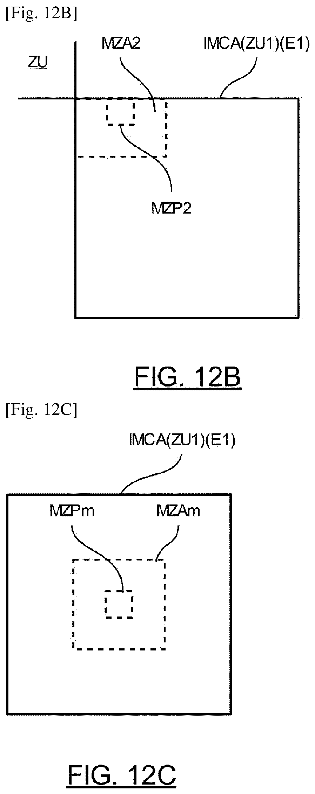

[Fig.12C] Les figures 12A à 12C sont des représentations schématiques d'une micro-zone de prédiction et de sa micro-zone d'apprentissage en fonction de la position de la micro-zone de prédiction dans la zone unitaire

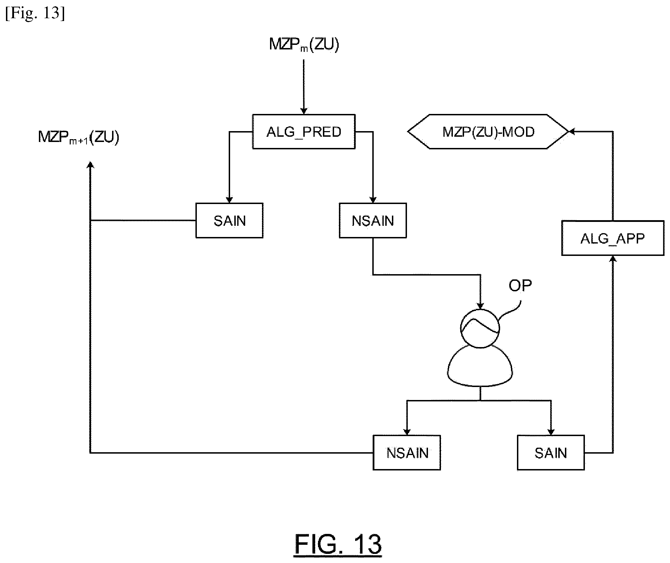

[Fig.13] La [Fig.13] est une représentation schématique d'une mise en œuvre d'un procédé d'apprentissage dynamique.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

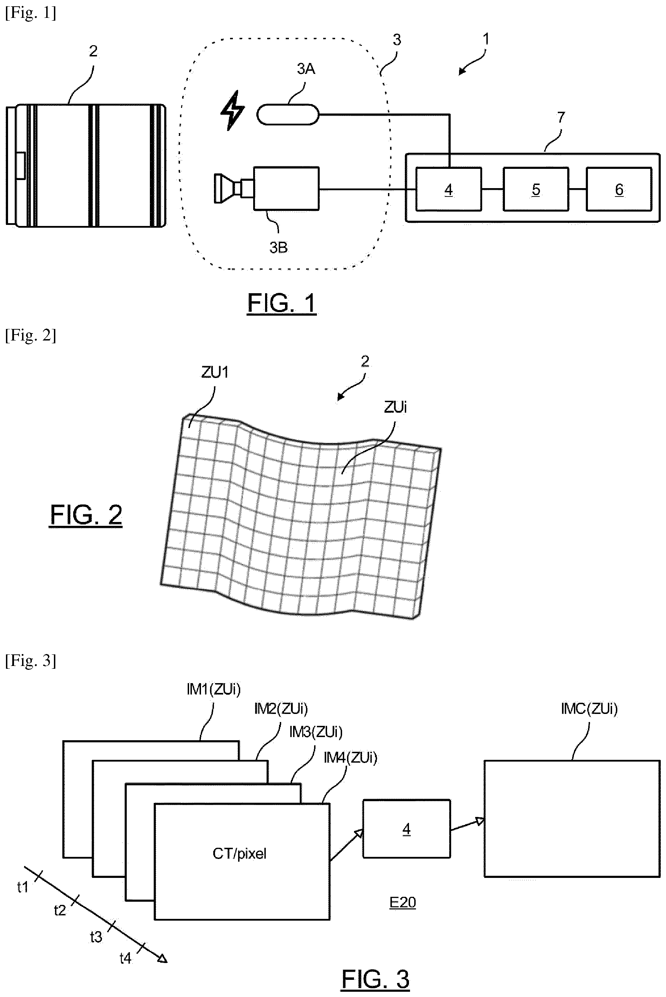

En référence à la [Fig.1], il est représenté un système 1 de contrôle non destructif selon une forme de réalisation de l'invention. Dans cet exemple, le système 1 permet de procéder au contrôle non destructif de grandes pièces aéronautiques, hétérogènes et de géométrie complexe, telles que par exemple une structure interne fixe (IFS) d'un inverseur de poussée équipant un aéronef. Toutefois, aucune limitation n'est attachée à la nature de la pièce sur laquelle le contrôle non destructif est appliqué. Il peut s'agir plus généralement de tout type de pièces, préférentiellement aéronautiques, comme par exemple une pièce équipant un moteur d'aéronef, etc., ces pièces pouvant être de taille et de géométrie quelconques, hétérogènes ou non, etc. Il va de soi que l'invention s'applique en outre également à d'autres domaines industriels qu'au domaine aéronautique.

Comme illustré à la [Fig.1], le système 1 de contrôle non destructif comprend : un système de thermographie active 3, un dispositif d'estimation 4, un dispositif de détection 5 configuré pour déterminer l'indice d'anormalité d'une pièce aéronautique 2 à partir des données estimées par le dispositif d'estimation 4 et un dispositif de visualisation 6 de l'indice d'anormalité de la pièce aéronautique 2.

Comme illustré à la [Fig.1], le système de thermographie active 3 comprend une ou plusieurs sources d'excitation 3A destinées à exciter en transmission et/ou en réflexion la pièce aéronautique 2 alors positionnée sur un support physique prévu à cet effet (non représenté sur la figure), et un dispositif d'acquisition 3B apte à mesurer la réponse (thermique ici) de tout ou partie de la pièce aéronautique 2 aux excitations des sources 3A sur une période déterminée Tacq qui peut varier selon la position dispositif d'acquisition 3B.

Dans le mode de réalisation décrit ici, la source d'excitation 3A est ici une source de chaleur apte à provoquer une excitation impulsionnelle, de type flash par exemple, de la pièce aéronautique 2. On s'intéresse ici à une excitation par réflexion de la pièce aéronautique 2.

En réponse à cette excitation impulsionnelle, la température à la surface de la pièce aéronautique 2 augmente instantanément (par exemple de 10-15 degrés). Puis, la diffusion de la quantité de chaleur dans la pièce aéronautique 2 se traduit par une décroissance en température à la surface de la pièce aéronautique 2 jusqu'à atteindre ou quasiment la température initiale de la pièce aéronautique 2 avant excitation (autrement dit, la température ambiante).

Le dispositif d'acquisition 3B est une caméra thermique infrarouge apte à capter (au moyen d'un capteur approprié), sur une période (durée) de temps dite d'acquisition déterminée, la réponse thermique en surface de la pièce aéronautique 2 à l'excitation impulsionnelle qui lui est appliquée par la ou les sources d'excitation 3A. La caméra thermique infrarouge 3B est en outre apte à fournir une séquence temporelle d'images numériques thermiques reflétant cette réponse sur la période d'acquisition. De manière préférée, la caméra thermique infrarouge 3B permet d'acquérir une vidéo numérique comportant les images numériques.

En référence à la [Fig.3], chaque image numérique IMj, j=1,...,4 fournie par la caméra infrarouge correspond à un instant d'acquisition tj défini sur la période d'acquisition, J désignant un entier supérieur à 1. Les instants tj sont par exemple espacés de manière uniforme sur la période d'acquisition. On considère ici par souci de simplification que l'origine du temps est l'instant du démarrage de l'excitation, en particulier à l'instant d'excitation dans le cas d'une excitation impulsionnelle de la pièce aéronautique 2 par le système de thermographie infrarouge 3. Suite à l'excitation par la ou les sources 3A, chaque image numérique IMj reflète la réponse thermique en surface d'une partie seulement de la pièce aéronautique 2 dite zone unitaire. La réponse thermique sur l'ensemble de la pièce aéronautique 2 est obtenue en réalisant une pluralité d'acquisitions unitaires, chaque acquisition unitaire ayant potentiellement une période d'acquisition différente, et chaque acquisition unitaire étant réalisée sur une zone d'acquisition unitaire, désignée zone unitaire ZUi, dédiée de la pièce aéronautique 2.

La dimension des zones unitaires ZUi est préférentiellement choisie en tenant compte des caractéristiques de la caméra thermique infrarouge 3B et des exigences sur les mesures réalisées par la caméra thermique (ex. résolution spatiale, résolution temporelle, rapport signal à bruit) induites par les exigences sur la précision d'estimation des dérivées. En outre, les zones unitaires ZUi sont choisies de sorte que leur juxtaposition couvre l'intégralité de la pièce aéronautique 2 (par exemple comme sur la [Fig.2] précédemment décrite) ou tout du moins une partie choisie préalablement de cette pièce aéronautique 2 sur laquelle on souhaite baser plus particulièrement le contrôle non destructif. Pour réaliser cette pluralité d'acquisitions unitaires, la caméra infrarouge 3B peut être placée par exemple sur un bras apte à se déplacer autour de la pièce aéronautique 2 et à positionner la caméra infrarouge 3B en vis-à-vis de chaque zone unitaire ZUi. Dans la suite de la description, on note ZU1, ZU2,...,ZUi, i désignant un entier supérieur à 1, les zones unitaires ZUi considérées lors des acquisitions unitaires et IMj(ZUi), j=1,...,4(i) les images thermiques fournies par la caméra infrarouge 3B de la zone unitaire ZUi. Chaque acquisition unitaire correspond à une période ou durée d'acquisition Tacqi, i=1,...,N.

Comme mentionné précédemment, chaque image numérique IMj(ZUi) de la pièce aéronautique 2 reflète la réponse thermique de la zone unitaire ZUi de la pièce aéronautique 2 à l'instant d'acquisition tj, suite à l'excitation (impulsionnelle ici) appliquée par le biais de la ou des sources d'excitation 3A. Chaque image numérique est obtenue avec un même point de vue. Elle comprend une pluralité de pixels correspondant à un échantillonnage spatial de la zone unitaire ZUi, autrement dit, chaque pixel est associé à un point de la zone unitaire ZUi. En référence à la [Fig.3], chaque pixel est associé sur l'image IMj(ZUi) à une amplitude à l'instant d'acquisition tj, cette amplitude étant ici une fonction croissante déterminée de la température surfacique de la pièce.

Dans le mode de réalisation décrit ici, les images numériques thermiques fournies par la caméra infrarouge 3B sont des images en deux dimensions codées en niveaux de gris : chaque pixel d'une image a donc une amplitude qui est ici un niveau de gris reflétant la température surfacique ou plus précisément une fonction croissante de la température surfacique en un point de la pièce aéronautique 2 représenté par le pixel. Cette fonction croissante résulte, de façon connue, de la combinaison de la loi de Planck en monochromatique et de la réponse supposée linéaire (au moins selon une certaine approximation) du capteur de la caméra infrarouge 3B : elle traduit la conversion en un niveau de gris ici de la luminance spectrale captée par le capteur de la caméra infrarouge 3B en le point représenté par le pixel, cette luminance spectrale reflétant la température surfacique de la pièce aéronautique en ce point (i.e. plus la température est élevée plus la luminance est élevée).

Conformément à l'invention, les images numériques acquises par le dispositif d'acquisition 3 et notamment par la caméra infrarouge 3B sont fournies au dispositif d'estimation 4 de manière à former une image de caractéristiques IMC(ZUi) comme illustré à la [Fig.3]. En particulier, à partir des images numériques IM1(ZUi),...,IMj(ZUi),...,IMJ(ZUi), on produit plusieurs images de caractéristiques IMC1(ZUi),...,IMCk(ZUi),...,IMCK(ZUi), selon un échantillonnage indicé par k spécifique à l'estimation. Chaque image IMCk(ZUi) est estimée à partir de plusieurs images {IMCj(ZUi)} avec des indices {j} tels que les {tj} son voisins de tk (estimation locale).

Dans le mode de réalisation décrit ici, le dispositif d'estimation 4 est configuré pour estimer à partir des images numériques fournies par la caméra infrarouge 3B, pour chaque pixel de l'image de caractéristiques IMC(ZUi), un vecteur de caractéristiques VC. A titre d'exemple, comme enseigné par la demande de brevet FR3071611A1, le vecteur de caractéristiques VC se présente sous la forme d'au moins une dérivée d'une première fonction mathématique f1 de la température par rapport à une deuxième fonction mathématique f2 du temps, en particulier, des fonctions de logarithme népérien. Il va de soi que le vecteur de caractéristiques VC pourrait se présenter sous une forme différente.

Dans cet exemple de mise en œuvre, la dérivée est évaluée en plusieurs instants, selon un schéma d'échantillonnage d'estimation. Autrement dit, on considère une collection d'images de caractéristiques à valeurs scalaires IMCk(ZUi) ou une image de caractéristiques à valeurs vectorielles IMC(ZUi) (c'est-à-dire que chaque pixel contient un vecteur). Ainsi, le vecteur de caractéristiques VC est à valeur vectorielle, plus précisément, c'est un vecteur dont les composantes sont les dérivées logarithmiques estimées en différents instants {k}.

Dans le mode de réalisation décrit ici, le dispositif d'estimation 4 a l'architecture matérielle d'un ordinateur. Il comprend, notamment un processeur, une mémoire vive, une mémoire morte, une mémoire flash non volatile ainsi que des moyens de communication permettant notamment au dispositif d'estimation de communiquer avec le dispositif de détection 5. Ces moyens de communication comprennent par exemple un bus de données numériques ou si le dispositif d'estimation 4 et le dispositif de détection 5 sont reliés via un réseau de télécommunications (local ou autre, filaire ou sans fil, etc.), une carte réseau ou une interface permettant de communiquer sur ce réseau. De manière préférée, le dispositif de détection 5 a l'architecture matérielle d'un ordinateur. De préférence encore, il en va de même du dispositif de visualisation 6. Dans cet exemple, en référence à la [Fig.1], le dispositif d'estimation 4, le dispositif de détection 5 et le dispositif de visualisation 6 peuvent être localisés au sein d'un même équipement 7, par exemple un ordinateur.

La mémoire morte du dispositif de détection 5 constitue un support d'enregistrement conforme à l'invention, lisible par le processeur et sur lequel est enregistré un programme d'ordinateur conforme à l'invention.

Comme mentionné précédemment, le système 1 de contrôle non destructif comprend également un dispositif de détection 5 de la pièce aéronautique 2. Ce dispositif de détection 5 est configuré pour permettre de vérifier l'intégrité de la pièce aéronautique 2 (c'est-à-dire de détecter la présence de défauts/d'anomalies dans la pièce aéronautique 2) en analysant le ou les vecteur de caractéristiques VC obtenus par le dispositif d'estimation 4. Le dispositif de détection 5 est configuré pour déterminer l'indice d'anormalité de chaque pixel d'une zone unitaire ZUi.

Selon l'invention, le dispositif de détection 5 est configuré pour détecter de manière automatique des défauts sur la pièce aéronautique 2 à partir des images de caractéristiques IMC fournies par le dispositif d'estimation 4 et déterminer un diagnostic quant à l'intégrité de la pièce aéronautique 2 (ex. détection ou non d'indications dans la structure de matériau laissant suspecter un défaut ou une anomalie), sans nécessiter l'intervention d'un opérateur.

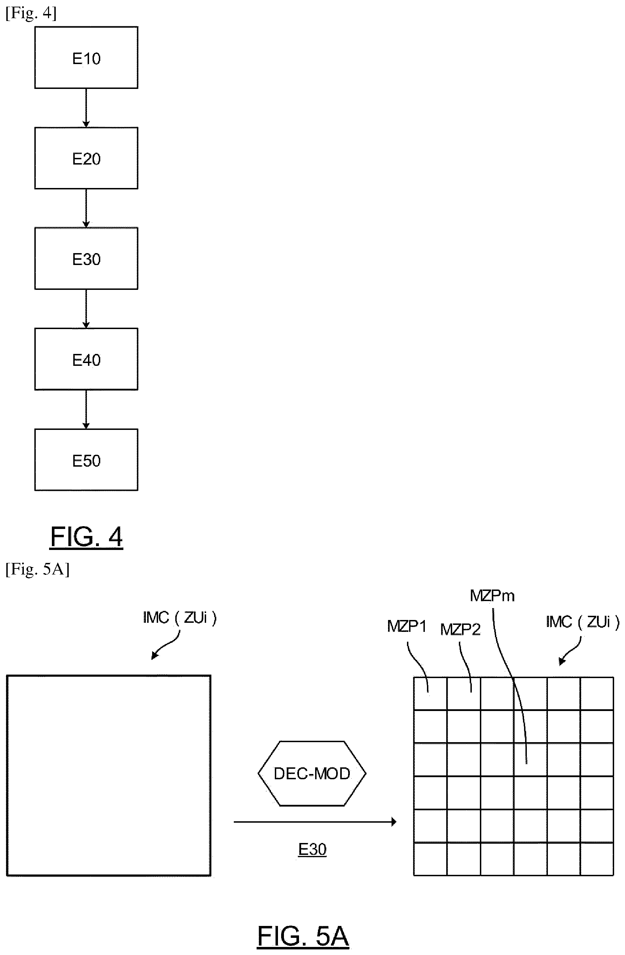

La [Fig.4] représente les différentes étapes du procédé mises en œuvre par le système 1 de contrôle non destructif illustré à la [Fig.1] pour opérer un contrôle non destructif de la pièce aéronautique 2 conformément à l'invention. Conformément à l'invention, le contrôle non destructif de la pièce aéronautique 2 s'appuie sur un procédé de thermographie infrarouge active. Ce procédé, connu en soi et brièvement rappelé précédemment, est mis en œuvre par le système de thermographie active 3. Plus particulièrement, le système de thermographie active 3 applique, par le biais de sources d'excitation 3A, une excitation impulsionnelle par réflexion ici sur la pièce aéronautique 2 positionnée sur son support prévu à cet effet. La réponse thermique de la pièce aéronautique 2 à cette excitation impulsionnelle est captée par la caméra infrarouge 3B durant une période d'acquisition déterminée, à une pluralité d'instants d'acquisition. Dans l'exemple envisagé ici, la pièce aéronautique 2 étant une structure IFS de grande taille, plusieurs acquisitions unitaires sont successivement réalisées sur la pièce aéronautique 2 comme mentionné précédemment.

Chaque acquisition unitaire est réalisée sur une période d'acquisition unitaire égale à Tacqn, chaque acquisition unitaire visant une zone unitaire ZUi distincte, i=1,...,N, les N zones d'acquisition unitaire ZUi juxtaposées permettant, comme mentionné précédemment, de couvrir la pièce aéronautique 2 dans son intégralité. La caméra infrarouge 3B génère, pour chaque acquisition unitaire indexée par i, une pluralité d'images numériques IMj, j=1,...,J(n) de la pièce aéronautique 2 représentant la réponse ainsi captée de la pièce aéronautique aux différents instants d'acquisition tj, j=1,...,3(i) (étape E10). Dans le mode de réalisation décrit ici, on suppose que les instants d'acquisition tj, j=1,...,3(i) définis sur la période de temps Tacqn sont espacés de façon uniforme avec un pas suffisamment faible pour avoir une bonne représentation de la réponse thermique de la zone unitaire ZUi de la pièce aéronautique 2 à l'excitation impulsionnelle appliquée à la pièce, et une redondance d'observation permettant une estimation précise en présence de bruit statistique d'observation. Les images numériques IMj(ZUi) acquises sur chacune des zones unitaires ZUi considérées représentent l'évolution de la température à la surface de la pièce aéronautique 2 suite à l'excitation impulsionnelle qui lui a été appliquée au moyen de la ou des sources d'excitation 3A. Plus particulièrement, chaque pixel noté PIX d'une image numérique IMj(ZUi) correspond à un point de la zone unitaire ZUi résultant d'un échantillonnage spatial de cette dernière. Chaque pixel PIX de l'image IMj(ZUi) a une amplitude notée amp(PIX) qui représente une fonction croissante de la température surfacique de la pièce aéronautique 2, à l'instant d'acquisition tj, en le point de la zone unitaire ZUi correspondant à ce pixel.

Les images numériques IMj(ZUi), j=1,...,J, i=1,...,N acquises par la caméra numérique 3B sont ensuite fournies par le système de thermographie active 3 au dispositif d'estimation 4. Conformément à l'invention, le dispositif 4 d'estimation estime, à partir des images numériques thermiques qui lui sont fournies, une image de caractéristiques IMC(ZUi) dans laquelle chaque pixel noté PIX est associé à un vecteur de caractéristiques VC comme présenté par exemple, par la demande de brevet FR3071611 (étape E20).

Le dispositif d'estimation 4 fournit l'image de caractéristiques IMC de chacune des zones d'acquisition unitaire ZUi au dispositif de détection 5 qui réalise une étape de partition (étape E30) et une étape de comparaison (étape E40) afin de déterminer une micro-carte d'anormalité, en particulier une carte de prédiction CDP ou un maque de prédiction MDP, qui est transmise au dispositif de visualisation 6 afin d'être consultée par un opérateur (Etape E50).

L'étape de partition E30 va dorénavant être présentée en détails.

Selon l'invention, en référence à la [Fig.5A], chaque image de caractéristiques IMC d'une zone unitaire ZUi est divisée/découpée/partitionnée en une pluralité de micro-zones de prédiction MZPm (ZUi) comprenant une pluralité de pixels. La division est réalisée à partir d'un modèle de découpage DEC-MOD configuré pour former des micro-zones de prédiction MZPm(ZUi) qui sont pertinentes. Dans cet exemple, les micro-zones de prédiction MZPm(ZUi) ont la même forme mais il va de soi qu'elles pourraient être différentes. Chaque micro-zone de prédiction MZPm(ZUi) comporte une pluralité de pixels. Chaque pixel d'une image de caractéristiques IMC n'appartient qu'à une unique micro-zone de prédiction MZPm(ZUi). Le fait d'utiliser des micro-zones plus grandes qu'un pixel permet d'apprendre la distribution de la variabilité locale en exploitant l'hypothèse de données localement homogènes

Comme présenté précédemment, chaque pixel est associé à un vecteur de caractéristiques VC. Comme cela sera présenté en détails par la suite, le but est de déterminer l'indice d'anormalité de chaque pixel de chaque micro-zone de prédiction MZPm de chaque zone unitaire ZUi de la pièce aéronautique 2.

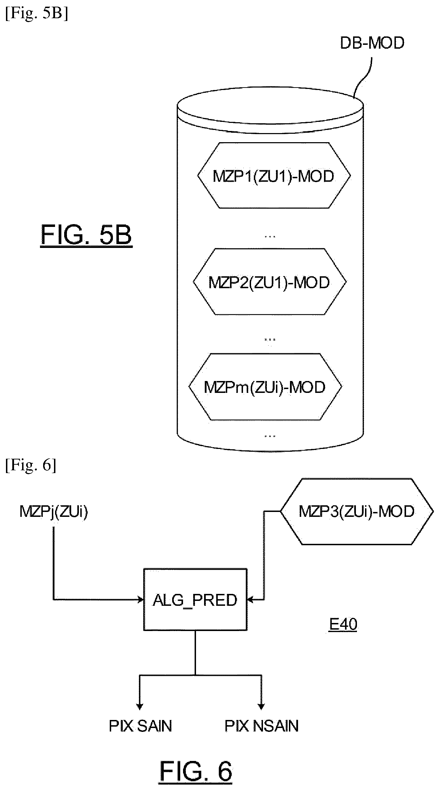

Afin de déterminer l'indice d'anormalité, en référence à la [Fig.5B], le procédé met en œuvre une base de données DB-MOD comprenant une pluralité de modèles locaux MZPm(ZUi)-MOD, chacun étant spécifique à une micro-zone de prédiction MZPm d'une zone unitaire ZUi comme cela sera présenté par la suite.

Lors de la mise en œuvre de l'étape de comparaison E40, en référence à la [Fig.6], chaque micro-zone de prédiction MZPm(ZUi) est comparée, grâce à un algorithme de prédiction statistique ALG_PRED, à un modèle statistique local préalablement estimé MZPm(ZUi)-MOD, désigné par la suite modèle local par souci de concision, de manière à déterminer l'indice d'anormalité. Pour un pixel donné de ladite micro-zone de prédiction MZPm(ZUi), un indice d'anormalité faible correspond un pixel sain SAIN tandis qu'un indice d'anormalité élevé correspond un pixel non sain NSAIN.

Dans cet exemple, un algorithme de prédiction statistique ALG_PRED du type FISVDD (Fast Incremental Support Vector Data Description), par exemple connu par le document - H. Jiang, H. Wang, W. Hu, D. Kakde, et A. Chaudhuri, « Fast Incremental SVDD Learning Algorithm with the Gaussian Kernel », août 2017 (https://www.research gate.net/publication/319463824_Fast_Incremental_SVDD_Lear ning_Algorithm_with_the_Gaussian_Kernel), est mis en œuvre étant donné qu'il présente de nombreux avantages dans le contexte de l'invention. Un tel algorithme de prédiction statistique ALG_PRED met en œuvre des vecteurs de support et est particulièrement performant lorsque le nombre et la dimension des vecteurs de support sont réduits. Cela est le cas dans la présente mise en œuvre étant donné que chaque modèle local MZPm(ZUi)-MOD possède un nombre réduit de vecteurs support du fait de sa localité comme cela sera présenté par la suite. Selon l'invention, en référence à la [Fig.5B], on dispose d'une base de données DB-MOD de modèles locaux MZPm(ZUi)-MOD. L'apprentissage d'un modèle local MZPm(ZUi)-MOD sera présentée par la suite.

L'algorithme de prédiction statistique ALG_PRED est de préférence non supervisé et s'appuie sur une connaissance aussi exhaustive que possible des données saines et ne requiert pas une connaissance exhaustive des défauts envisageables. Ainsi, deux vecteurs de caractéristiques VC différents peuvent conduire au même indice d'anormalité.

L'utilisation de modèles locaux permet naturellement de discriminer par la position un vecteur de caractéristiques VC d'un pixel qui peut être normal dans une micro-zone donnée et anormale dans une micro-zone voisine. De manière incidente, un modèle global ne permet pas de détecter une telle anomalie, dont la détectabilité repose sur la position précise.

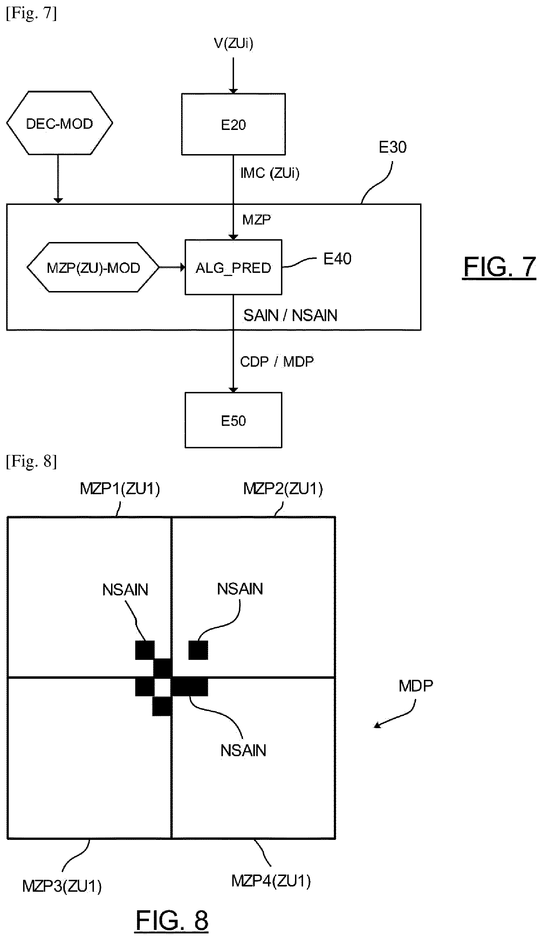

En référence à la [Fig.7], il est représenté une vidéo V(ZUi) d'une zone unitaire ZUi qui subit une étape d'estimation E20 des vecteurs de caractéristiques VC de ses pixels comme présenté précédemment de manière à former une image de caractéristiques IMC(ZUi).

Le procédé comporte une étape de partition E30 au cours de laquelle chaque image de caractéristiques IMC(ZUi) est découpée en micro-zones de prédiction MZPm(ZUi) par utilisation du modèle de découpage prédéterminé DEC-MOD.

Le procédé comporte ensuite une étape de comparaison E40 dans laquelle chaque micro-zone de prédiction MZPm(ZUi) est ensuite comparée à son modèle local MZPm(ZUi)-MOD de manière à déterminer, grâce à l'algorithme de prédiction statistique ALG_PRED, l'indice d'anormalité (SAIN ou NSAIN) de chaque pixel de chaque micro-zone de prédiction MZPm(ZUi). Une telle étape de comparaison E40 est simple et rapide à réaliser car le modèle local MZPm(ZUI)-MOD possède une faible dimension et a été déterminé dans des conditions d'acquisition optimales. La puissance de calcul nécessaire est ainsi réduite.

De manière avantageuse, l'estimation de l'indice d'anormalité de chaque pixel de chaque micro-zone de prédiction MZPm(ZUi) peut être réalisée en parallèle de manière à réduire le temps de traitement d'une zone unitaire ZUi.

En pratique, lors de l'étape de comparaison E40, on applique pour chaque pixel caractéristique z la formule suivante pour déterminer le niveau d'anormalité.

[Math.1]

$$Q(z) = \sum_i \alpha_i K(x_k, x_i) - \sum_i \alpha_i K(z, x_i)$$

- formule dans laquelle
- $\alpha_i$ sont les multiplicateurs de Lagrange des vecteurs supports.

- K la fonction noyau
- $x_i$ sont les vecteurs supports et sont de même dimension que les pixels caractéristiques et constituent même, par construction, une sélection parmi tous les pixels observés dans le processus d'apprentissage.

Les $\alpha_i$ et les $x_i$ sont appris dans le processus d'apprentissage et constituent les paramètres du modèle local.

Par construction, lorsque l'indice d'anormalité Q(z) est inférieur à 0, le pixel z est « sain ». A l'inverse, lorsque l'indice d'anormalité Q(z) est supérieur à 0,le pixel z est « non-sain ». Autrement dit, aucun pixel ressemblant n'a été observé pendant l'apprentissage. A partir des indices d'anormalité Q(z) de chaque zone unitaire ZUi, on peut former une carte de prédiction CDP(ZUi). Une telle carte de prédiction CDP(ZUi) permet de faciliter la prise de décision de l'opérateur en ne lui présentant que des informations pertinentes, en particulier, des informations continues. Par seuillage des indices d'anormalité Q(z) d'une carte de prédiction CDP, on obtient de manière avantageuse un masque binaire de prédiction MDP avec des informations binaires (indice d'anormalité sain SAIN ou non-sain NSAIN)..

Ainsi, pour chaque zone unitaire ZUi, les pixels des micro-zones de prédiction MZPm(ZUi) ayant un indice d'anormalité sain SAIN sont déterminés de manière automatique.

Comme illustré à la [Fig.7], le procédé comporte une étape de visualisation E50 au cours de laquelle l'opérateur peut estimer de manière visuelle les indices d'anormalité des différents pixels des micro-zones de prédiction MZPm(ZUi) d'une zone unitaire ZUi. L'opérateur peut alors déterminer si les pixels des micro-zones de prédiction MZPm(ZUi) considérés comme non-sains sont effectivement défectueux ou correspondent à une fausse alarme. Un opérateur peut ainsi réserver son attention et son expertise pour les pixels dont l'indice d'anormalité est non-sain NSAIN, afin de déterminer si les micro-zones de prédiction MZPm(ZUi) comprennent effectivement une anomalie.

En référence à la [Fig.8], il est représenté de manière schématique un masque binaire de prédiction MDP de plusieurs zones de prédiction MZP1-MZP4 de la première zone unitaire ZU1 dans laquelle sept pixels sont considérés comme non-sains (représentés en noir sur la [Fig.8]). De manière avantageuse, l'opérateur peut déterminer si les pixels considérés comme non-sains sont effectivement défectueux ou correspondent à une fausse alarme.

Il va dorénavant être présenté la détermination d'un modèle local MZPm(ZUi)-MOD qui soit pertinent tout en possédant un coût calculatoire faible.

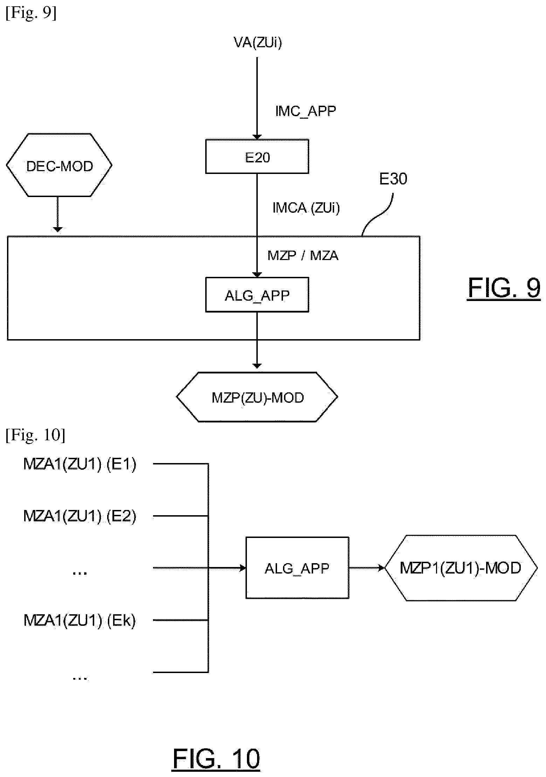

Dans cet exemple, en référence aux figures 9 et 10, un algorithme statistique d'apprentissage ALG_APP incrémental du type FISVDD (Fast Incremental Support Vector Data Description) est mis en œuvre pour l'apprentissage. Comme cela va être présenté par la suite, chaque modèle local MZPm(ZUi)-MOD est déterminé par apprentissage.

En référence à la [Fig.9], on dispose d'une vidéo annotée VA(ZUi), c'est-à-dire, une vidéo d'une zone unitaire ZUi d'un échantillon d'une pièce aéronautique d'apprentissage 2_APP, correspondant à la pièce aéronautique 2 à contrôler, dont il a été déterminé l'indice d'anormalité de manière préalable (SAIN ou NSAIN) pour chaque pixel. De préférence, seule des vidéos ayant des pixels dépourvus d'anomalie sont utilisés. De manière alternative, une vidéo contenant une anomalie peut servir pour l'apprentissage ou la mise à jour des modèles locaux. Seuls les pixels normaux de ladite vidéo seront visités au cours du processus d'apprentissage. Chaque vidéo annotée VA(ZUi) comporte une pluralité d'images d'apprentissage IMC_APP.

Les images d'apprentissage IMC_APP subissent une étape d'estimation E20 des vecteurs de caractéristiques VC de ses pixels comme présenté précédemment de manière à former une image de caractéristiques annotée IMCA(ZUi).

L'image de caractéristiques annotée IMCA(ZUi) est découpée en micro-zones de prédiction MZPm(ZUi), conformément à l'étape de partition E30 présentée précédemment, par utilisation du modèle de découpage prédéterminé DEC-MOD. De manière avantageuse, la variabilité des micro-zones de prédiction MZPm(ZUi) est faible pour une même zone unitaire ZUi étant donné que, pour un tel contrôle non-destructif, la pièce aéronautique 2 est positionnée de manière très précise sur son support. Une telle caractéristique permet de réduire l'hétérogénéité et donc, la dimension du modèle local. L'indice d'anormalité (SAIN ou NSAIN) de chaque pixel de chaque micro-zone de prédiction MZPm(ZUi) est connu du fait des annotations.

Selon l'invention, le modèle local MZPm(ZUi)-MOD d'une micro-zone de prédiction MZPm(ZUi) est obtenu au moyen de l'algorithme d'apprentissage ALG_APP à partir des vecteurs de caractéristiques VC des pixels d'une micro-zone d'apprentissage MZAm(ZUi) de l'image de caractéristiques annotée IMCA(ZUi) dans laquelle la micro-zone de prédiction MZPm(ZUi) est incluse.

En référence à la [Fig.11], il est représenté un exemple de profil d'une micro-zone d'apprentissage MZA ayant une forme de carré. Il va néanmoins de soi qu'elle pourrait avoir une forme différente, notamment sensiblement circulaire. La micro-zone d'apprentissage MZA inclut une micro-zone de prédiction MZP qui est, de préférence centrée, par rapport à la micro-zone d'apprentissage MZA. De manière préférée, la micro-zone de prédiction MZP représente entre 5% et 15% de la surface de la micro-zone d'apprentissage MZA de manière à limiter tout effet de bord.

Comme illustré à la [Fig.11], chaque micro-zone de prédiction MZP possède un premier rayon rP et chaque micro-zone d'apprentissage MZA possède un deuxième rayon rA qui est supérieur ou égal à deux fois le premier rayon rP. De préférence, la micro-zone de prédiction MZP et la micro-zone d'apprentissage MZA sont concentriques. Autrement dit, il existe une marge d entre la micro-zone de prédiction MZP et la micro-zone d'apprentissage MZA qui est supérieure ou égale au rayon premier rP (d=rA-rP). De manière préférée, la marge d est égale au premier rayon rP. Une telle marge d permet de tenir compte de l'incertitude de position cumulée (erreur de position pièce et erreur de position du dispositif d'acquisition) et de réduire le nombre de pièce d'apprentissage en valorisant l'homogénéité locale.

En référence aux figures 12A à 12C, il est représenté plusieurs micro-zones d'apprentissage MZA d'une même zone unitaire ZU1 d'une image de caractéristiques annotée IMCA d'un premier échantillon E1 d'une pièce aéronautique 2. Chaque micro-zone d'apprentissage MZA appartient uniquement à la zone unitaire ZU1 à laquelle appartient la micro-zone de prédiction MZP associée à la micro-zone d'apprentissage MZA.

Aussi, comme illustré aux figures 12A et 12B, les micro-zones d'apprentissage MZA sont tronquées étant donné que leurs micro-zones de prédiction MZP sont positionnées sur un bord de la zone unitaire ZU1. A l'inverse, comme illustré à la [Fig.12C], la micro-zone d'apprentissage MZA s'étend de manière périphérique autour de la micro-zone de prédiction MZP.

Dans cet exemple, en référence à la [Fig.10], à partir de plusieurs échantillons E1, E2,.., Ek, ... d'une pièce aéronautique d'apprentissage 2_APP, on détermine une pluralité de premières micro-zones d'apprentissage MZA1(ZU1) (Ek) d'une même première micro-zone de prédiction MZP1 d'une même première zone unitaire ZU1. L'indice d'anormalité est connu pour chaque pixel de chaque micro-zones d'apprentissage MZA1(ZU1)(Ek). On peut ainsi estimer, grâce à l'algorithme d'apprentissage ALG_APP, le modèle local MZP1(ZU1)-MOD pour la première micro-zone de prédiction MZP1 de la première zone unitaire ZU1.

L'apprentissage est répété pour obtenir un modèle local MZP1(ZU1)-MOD pour chaque micro-zone de prédiction MZPm de chaque zone unitaire ZUi. De manière avantageuse, la dimension réduite de chaque micro-zone de prédiction MZPm couplée à une acquisition de grande qualité (faible variation de conditions d'acquisition comme la pièce aéronautique 2 est supportée de manière précise) permet de former des modèles locaux MZPm(ZUi)-MOD ayant une dimension faible, ce qui accélère leur détermination. Etant donné que le modèle est local, il possède une complexité réduite par comparaison à un modèle global qui doit tenir compte d'une hétérogénéité plus grande. Plus l'hétérogénéité est importante, plus le nombre de paramètres pour définir le modèle local est élevé. Plus le nombre d'échantillons Ek est élevé et plus le modèle local MZP1(ZU1)-MOD sera pertinent en incluant la variabilité entre chaque pièce. De préférence, les échantillons Ek appartiennent à une base d'apprentissage BA qui a été préalablement annotée.

Il est présenté à la [Fig.10] un procédé d'apprentissage statique à partir d'une base d'apprentissage BA obtenue de manière préalable mais le procédé d'apprentissage peut également être dynamique comme cela sera présenté par la suite en référence à la [Fig.13].

Un algorithme d'apprentissage ALG_APP incrémental est préféré étant donné qu'il permet de mettre à jour le modèle local MZPm(ZUi)-MOD au fur et à mesure de l'obtention d''images de caractéristiques d'apprentissage IMC_APP comme cela sera présenté par la suite. Par incrémental, on entend que chaque image de caractéristiques contribuant à l'apprentissage n'est parcourue qu'une fois dans le processus d'apprentissage d'un modèle local. Ainsi, la pertinence du modèle local augmente au fur et à mesure du temps.

De manière avantageuse, le procédé d'apprentissage est dynamique et couplé au procédé de détection comme illustré à la [Fig.13].

Lors de la mise en œuvre du procédé de prédiction pour une micro-zone de prédiction MZPm(ZUi), l'algorithme de prédiction ALG_PRED, en s'appuyant sur le modèle local MZPm(ZUi)-MOD, détermine si les pixels de la micro-zone de prédiction MZPm(ZUi) sont sains SAIN ou non-sains NSAIN. Si tous les pixels sont sains SAIN, le procédé de prédiction est mise en œuvre pour une autre micro-zone de prédiction MZPm+1(ZUi).

Si un ou plusieurs pixels de la micro-zone de prédiction MZPm(ZUi) sont non-sains NSAIN, un opérateur OP analyse la carte de prédiction CDP ou le masque binaire de prédiction MDP de la micro-zone de prédiction MZPm(ZUi) afin de déterminer d'éventuelles fausses alertes. Si tout est conforme pour l'opérateur OP, le procédé de prédiction est mise en œuvre pour une autre micro-zone de prédiction MZPm+1(ZUi). A l'inverse, si l'opérateur OP détecte une fausse alerte, un pixel considéré comme non-sain NSAIN est en réalité SAIN, il annote ladite micro-zone de prédiction MZP(ZUi) et la transmet à l'algorithme d'apprentissage ALG_APP qui met à jour le modèle local MZPm(ZUi)-MOD sur lequel l'algorithme de prédiction ALG_PRED s'appuie. Ainsi, le modèle local MZPm(ZUi)-MOD est affiné pour un coût calculatoire réduit étant donné que l'algorithme d'apprentissage ALG_APP est incrémental.

Grâce aux modèles locaux, on peut s'affranchir de vecteurs de caractéristiques très hétérogènes entre des zones géographiquement proches et/ou ayant des épaisseurs différentes. De plus, l'utilisation d'algorithme de prédiction ALG_PRED et d'apprentissage ALG_APP performants permet une augmentation de la pertinence au fur et à mesure de leur utilisation pour un coût calculatoire faible, ce qui est optimal pour l'analyse de pièces aéronautiques de grande taille.

## Revendications

1. Procédé de contrôle non destructif d'une pièce aéronautique (2) comprenant

- une étape d'obtention (E10), au moyen d'un système (3) de thermographie infrarouge active, d'une pluralité d'images numériques d'une zone unitaire (ZUi) de la pièce aéronautique (2) acquises à une pluralité d'instants d'acquisition définis sur une période de temps déterminée dite période d'acquisition, chaque pixel d'une image numérique acquise à un instant d'acquisition ayant une amplitude à cet instant d'acquisition en un point de la pièce aéronautique (2) ; la pièce aéronautique (2) étant positionnée de manière fixe et un dispositif d'acquisition (3B) du système de thermographie infrarouge active est déplacé pour acquérir une pluralité d'images numériques de chaque zone unitaire (ZUi), chaque position du dispositif d'acquisition (3B) correspondant à chaque zone unitaire (ZUi),

- une étape d'estimation (E20), à partir des images numériques acquises de la zone unitaire (ZUi), d'une image de caractéristiques (IMC) représentative de la zone unitaire (ZUi), chaque pixel de l'image de caractéristiques (IMC) comportant un vecteur de caractéristiques (VC)

- une étape de partition (E30) de l'image de caractéristiques (IMC) en une pluralité de micro-zones de prédiction (MZPm(ZUi)), chaque micro-zone de prédiction MZPm(ZUi) comportant une pluralité de pixels,

- une étape de comparaison (E40) du vecteur de caractéristiques (VC) de chaque pixel de chaque micro-zone de prédiction (MZPm(ZUi)) à un modèle statistique local préalablement estimé (MZPm(ZUi)-MOD) de ladite micro-zone de prédiction (MZPm(ZUi)) de ladite zone unitaire (ZUi), désigné par la suite modèle local (MZPm(ZUi)-MOD), au moyen d'un algorithme de prédiction statistique (ALG_PRED) de manière à déterminer un indice d'anormalité pour chaque pixel de chaque micro-zone de prédiction (MZPm(ZUi)) afin de former une micro-carte d'anormalité de chaque micro-zone de prédiction (MZPm(ZUi)) de ladite zone unitaire (ZUi), l'assemblage des micro-cartes d'anormalité d'une zone unitaire (ZUi) formant une carte d'anormalité de ladite zone unitaire (ZUi),

- chaque modèle local (MZPm(ZUi)-MOD) d'une micro-zone de prédiction (MZPm(ZUi)) ayant été obtenu à partir des vecteurs de caractéristiques des pixels d'au moins une image de caractéristiques annotée (IMCA) représentative d'une zone unitaire d'au moins une pièce aéronautique d'apprentissage (2_APP) correspondant à la pièce aéronautique (2) à contrôler, la zone unitaire d'au moins une pièce aéronautique d'apprentissage (2_APP) correspondant à la zone unitaire (ZUi) de la pièce aéronautique (2) à contrôler ;

- le modèle local (MZPm(ZUi)-MOD) d'une micro-zone de prédiction (MZPm(ZUi)) étant obtenu au moyen d'un algorithme d'apprentissage (ALG_APP) à partir des vecteurs de caractéristiques des pixels d'une micro-zone d'apprentissage (MZAm) de l'image de caractéristiques annotée (IMCA), l'image de caractéristiques annotée (IMCA) étant partitionnée en micro-zones de prédiction de manière analogue à précédemment, chaque micro-zone de prédiction de l'image de caractéristiques annotée (IMCA) étant incluse dans une micro-zone d'apprentissage de l'image de caractéristiques annotée (MZAm).

2. Procédé selon la revendication 1, comprenant une étape de comparaison de l'indice d'anormalité de chaque pixel de chaque micro-zone de prédiction (MZPm) à un seuil prédéterminé afin de former un masque binaire de prédiction (MDP) de ladite zone unitaire (ZUi).

3. Procédé selon l'une des revendications 1 et 2, dans lequel chaque micro-zone de prédiction (MZPm) est centrée par rapport à la micro-zone d'apprentissage (MZAm) dans laquelle elle est incluse.

4. Procédé selon l'une des revendications 1 à 3, dans lequel chaque micro-zone de prédiction (MZPm) possède une dimension inférieure à la dimension de la micro-zone d'apprentissage (MZAm) dans laquelle elle est incluse.

5. Procédé selon la revendication 4, dans lequel la micro-zone de prédiction (MZPm) et la micro-zone d'apprentissage (MZAm) sont concentriques.

6. Procédé selon l'une des revendications 1 à 5, dans lequel la micro-zone de prédiction (MZPm) possède un premier rayon (rP) et la micro-zone d'apprentissage (MZAm) possède un deuxième rayon (rA) qui est supérieur ou égal à deux fois le premier rayon (rP).

7. Procédé selon l'une des revendications 1 à 6, dans lequel l'algorithme d'apprentissage (ALG_APP) est un algorithme statistique incrémental de manière à permettre une mise à jour dynamique.

8. Procédé selon la revendication 7, dans lequel l'algorithme d'apprentissage (ALG_APP) est un algorithme statistique du type FISVDD (Fast Incremental Support Vector Data Description).

9. Procédé selon l'une des revendications 1 à 8, comprenant une étape d'analyse de la carte d'anormalité par un opérateur, une étape d'annotation de la micro-zone de prédiction (MZPm(ZUi)), si elle est contient des pixels suspects au sens de la prédiction algorithmique, par ledit opérateur et une étape de mise à jour du modèle local (MZPm(ZUi)-MOD) de ladite micro-zone de prédiction (MZPm(ZUi)) à partir de ladite micro-zone de prédiction (MZPm(ZUi)) annotée et de l'algorithme d'apprentissage (ALG_APP).

**10.** Système (1) de contrôle non destructif d'une pièce aéronautique (2) comprenant :

- un système de thermographie infrarouge active (3) comprenant un dispositif d'excitation (3A) et un dispositif d'acquisition (3B) configurés pour acquérir à une pluralité d'instants d'acquisition définis sur une période de temps déterminée, dite période d'acquisition, des images numériques d'une zone unitaire (ZUi) de la pièce aéronautique, chaque pixel d'une image numérique acquise à un instant d'acquisition ayant une amplitude à cet instant d'acquisition en un point de la pièce aéronautique après excitation de la pièce aéronautique (2) par le dispositif d'excitation (3A) ; la pièce aéronautique (2) étant positionnée de manière fixe et le dispositif d'acquisition (3B) du système de thermographie infrarouge active étant configuré pour être déplacé pour acquérir une pluralité d'images numériques de chaque zone unitaire (ZUi), chaque position du dispositif d'acquisition (3B) correspondant à chaque zone unitaire (ZUi),
- un dispositif d'estimation (4) configuré pour estimer, à partir des images numériques acquises de la zone unitaire (ZUi), d'une image de caractéristiques (IMC) représentative de la zone unitaire (ZUi), chaque pixel de l'image de caractéristiques (IMC) comportant un vecteur de caractéristiques (VC)
- un dispositif de détection (5) configuré pour :

  - partitionner une image de caractéristiques (IMC) en une pluralité de micro-zones de prédiction (MZPm), chaque micro-zone de prédiction MZPm(ZUi) comportant une pluralité de pixels,
  - comparer le vecteur de caractéristiques (VC) de chaque pixel de chaque micro-zone de prédiction (MZPm(ZUi)) à un modèle statistique local préalablement estimé (MZPm(ZUi)-MOD) de ladite micro-zone de prédiction (MZPm(ZUi)) de ladite zone unitaire (ZUi), désigné par la suite modèle local (MZPm(ZUi)-MOD), au moyen d'un algorithme de prédiction statistique (ALG_PRED) de manière à déterminer un indice d'anormalité pour chaque pixel de chaque micro-zone de prédiction (MZPm(ZUi)) afin de former une micro-carte d'anormalité de chaque micro-zone de prédiction (MZPm(ZUi)) de ladite zone unitaire (ZUi), l'assemblage des micro-cartes d'anormalité d'une zone unitaire (ZUi) formant une carte d'anormalité de ladite zone unitaire (ZUi),

  - chaque modèle local (MZPm(ZUi)-MOD) d'une micro-zone de prédiction (MZPm(ZUi)) ayant été obtenu à partir des vecteurs de caractéristiques des pixels d'au moins une image de caractéristiques annotée (IMCA) représentative d'une zone unitaire (ZUi) d'au moins une pièce aéronautique d'apprentissage (2_APP) correspondant à la pièce aéronautique (2) à contrôler, la zone unitaire d'au moins une pièce aéronautique d'apprentissage (2_APP) correspond à la zone unitaire (ZUi) de la pièce aéronautique (2) à contrôler ;

  - le modèle local (MZPm(ZUi)-MOD) d'une micro-zone de prédiction (MZPm) étant obtenu au moyen d'un algorithme d'apprentissage (ALG_APP) à partir des vecteurs de caractéristiques des pixels d'une micro-zone d'apprentissage (MZAm) de l'image de caractéristiques annotée (IMCA), l'image de caractéristiques annotée (IMCA) étant partitionnée en micro-zones de prédiction MZPm(ZUi) de manière analogue à précédemment, chaque micro-zone de prédiction (MZPm) de l'image de caractéristiques annotée (IMCA) étant incluse dans une micro-zone d'apprentissage (MZAm) de l'image de caractéristiques annotée (IMCA).

**Patentansprüche**

**1.** Verfahren zur zerstörungsfreien Prüfung eines Luftfahrtteils (2), umfassend

- einen Schritt des Erhaltens (E10), mittels eines aktiven Infrarot-Thermographiesystems (3), einer Vielzahl digitaler Bilder einer Flächeneinheit (ZUi) des Luftfahrtteils (2), die zu einer Vielzahl von Erfassungszeitpunkten erfasst werden, die über einen bestimmten Zeitraum, bezeichnet als Erfassungszeitraum, definiert sind, wobei jedes Pixel eines zu einem Erfassungszeitpunkt erfassten digitalen Bildes eine Amplitude zu diesem Erfassungszeitpunkt an einem Punkt des Luftfahrtteils (2) hat; wobei das Luftfahrtteil (2) fest positioniert ist und eine Erfassungsvorrichtung (3B) des aktiven Infrarot-Thermografiesystems bewegt wird, um eine Vielzahl digitaler Bilder jeder Flächeneinheit (ZUi) zu erfassen, wobei jede Position der Erfassungsvorrichtung (3B) jeder Flächeneinheit (ZUi) entspricht,
- einen Schritt des Schätzens (E20) eines für die Flächeneinheit (ZUi) repräsentativen Merkmalsbildes (IMC) aus den erfassten digitalen Bildern der Flächeneinheit (ZUi), wobei jedes Pixel des Merkmalsbildes (IMC) einen Merkmalsvektor (VC) aufweist,
- einen Schritt des Partitionierens (E30) des Merkmalsbildes (IMC) in eine Vielzahl von Mikro-Vorhersagezonen (MZPm(ZUi)), wobei jede Mikro-Vorhersagezone MZPm(ZUi) eine Vielzahl von Pixeln umfasst,
- einen Schritt des Vergleichens (E40) des Merkmalsvektors (VC) jedes Pixels jeder Mikro-Vorhersagezone (MZPm(ZUi)) mit einem zuvor geschätzten lokalen statistischen Modell (MZPm(ZUi)-MOD) der Mikro-Vorhersagezone (MZPm(ZUi)) der Flächeneinheit (ZUi), nachfolgend als lokales Modell (MZPm(ZUi)-MOD) bezeichnet, mittels eines statistischen Vorhersagealgorithmus (ALG_PRED), um einen Anomalieindex für jedes Pixel jeder Mikro-Vorhersagezone (MZPm(ZUi)) zu bestimmen, um eine Anomalie-Mikrokarte jeder Mikro-Vorhersagezone (MZPm(ZUi)) der Flächeneinheit (ZUi) zu bilden, wobei die Kombination der Anomalie-Mikrokarten einer Flächeneinheit (ZUi) eine Anomaliekarte der Flächeneinheit (ZUi) bildet,
- wobei jedes lokale Modell (MZPm(ZUi)-MOD) einer Mikro-Vorhersagezone (MZPm(ZUi)) aus den Merkmalsvektoren der Pixel mindestens eines markierten Merkmalsbildes (IMCA) erhalten wurde, das für eine Flächeneinheit mindestens eines Luftfahrt-Lernbauteils (2_APP) repräsentativ ist, das dem zu prüfenden Luftfahrtteil (2) entspricht, wobei die Flächeneinheit mindestens eines Luftfahrt-Lernbauteils (2_APP) der Flächeneinheit (ZUi) des zu prüfenden Luftfahrtteils (2) entspricht;
- wobei das lokale Modell (MZPm(ZUi)-MOD) einer Mikro-Vorhersagezone (MZPm(ZUi)) mittels eines Lernalgorithmus (ALG_APP) aus den Merkmalsvektoren der Pixel einer Mikro-Lernzone (MZAm) des markierten Merkmalsbildes (IMCA) erhalten wird, wobei das markierte Merkmalsbild (IMCA) in Mikro-Vorhersagezonen analog zu zuvor partitioniert wird, wobei jede Mikro-Vorhersagezone des markierten Merkmalsbildes (IMCA) in einer Mikro-Lernzone des markierten Merkmalsbildes (MZAm) enthalten ist.

2. Verfahren nach Anspruch 1, umfassend einen Vergleichsschritt des Anomalieindex jedes Pixels jeder Mikro-Vorhersagezone (MZPm) mit einem vorbestimmten Schwellenwert, um eine binäre Vorhersagemaske (MDP) der Flächeneinheit (ZUi) zu bilden.

3. Verfahren nach einem der Ansprüche 1 und 2, wobei jede Mikro-Vorhersagezone (MZPm) in Bezug auf die Mikro-Lernzone (MZAm), in der sie enthalten ist, zentriert ist.

4. Verfahren nach einem der Ansprüche 1 bis 3, wobei jede Mikro-Vorhersagezone (MZPm) eine Abmessung aufweist, die kleiner ist als die Abmessung der Mikro-Lernzone (MZAm), in der sie enthalten ist.

5. Verfahren nach Anspruch 4, wobei die Mikro-Vorhersagezone (MZPm) und die Mikro-Lernzone (MZAm) konzentrisch sind.

6. Verfahren nach einem der Ansprüche 1 bis 5, wobei die Mikro-Vorhersagezone (MZPm) einen ersten Radius (rP) besitzt und die Mikro-Lernzone (MZAm) einen zweiten Radius (rA) besitzt, der größer oder gleich dem Doppelten des ersten Radius (rP) ist.

7. Verfahren nach einem der Ansprüche 1 bis 6, wobei der Lernalgorithmus (ALG_APP) ein inkrementeller statistischer Algorithmus ist, um eine dynamische Aktualisierung zu ermöglichen.

8. Verfahren nach Anspruch 7, wobei der Lernalgorithmus (ALG_APP) ein statistischer Algorithmus vom Typ FISVDD (Fast Incremental Support Vector Data Description) ist.

9. Verfahren nach einem der Ansprüche 1 bis 8, umfassend einen Schritt des Analysierens der Anomaliekarte durch einen Bediener, einen Schritt des Markierens der Mikro-Vorhersagezone (MZPm(ZUi)), wenn sie verdächtige Pixel im Sinne der algorithmischen Vorhersage enthält, durch den Bediener und einen Schritt des Aktualisierens des lokalen Modells (MZPm(ZUi)-MOD) der Mikro-Vorhersagezone (MZPm(ZUi)) anhand der markierten Mikro-Vorhersagezone (MZPm(ZUi)) und des Lernalgorithmus (ALG_APP).

10. System (1) zur zerstörungsfreien Prüfung eines Luftfahrtteils (2), umfassend:

- ein aktives Infrarot-Thermographiesystem (3), umfassend eine Anregungsvorrichtung (3A) und eine Erfassungsvorrichtung (3B), die ausgelegt sind, um zu einer Vielzahl von Erfassungszeitpunkten, die über einen bestimmten Zeitraum festgelegt sind, bezeichnet als Erfassungszeitraum, digitale Bilder einer Flächeneinheit (ZUi) des Luftfahrtteils zu erfassen, wobei jedes Pixel eines zu einem Erfassungszeitpunkt erfassten digitalen Bildes eine Amplitude zu diesem Erfassungszeitpunkt an einem Punkt des Luftfahrtteils nach Anregung des Luftfahrtteils (2) durch die Anregungsvorrichtung (3A) hat; wobei das Luftfahrtteil (2) fest positioniert ist und die Erfassungsvorrichtung (3B) des aktiven Infrarot-Thermographiesystems ausgelegt ist, um bewegt zu werden, um eine Vielzahl digitaler Bilder jeder Flächeneinheit (ZUi) zu erfassen, wobei jede Position der Erfassungsvorrichtung (3B) jeder Flächenheinheit (ZUi) entspricht,

- eine Schätzvorrichtung (4), die ausgelegt ist, um aus den erfassten digitalen Bildern der Flächeneinheit (ZUi) ein für die Flächeneinheit (ZUi) repräsentatives Merkmalsbild (IMC) zu schätzen, wobei jedes Pixel des Merkmalsbildes (IMC) einen Merkmalsvektor (VC) aufweist

- eine Detektionsvorrichtung (5), die ausgelegt ist, um:

- ein Merkmalsbild (IMC) in eine Vielzahl von Mikro-Vorhersagezonen (MZPm) zu partitionieren, wobei jede Mikro-Vorhersagezone MZPm(ZUi) eine Vielzahl von Pixeln umfasst,

- den Merkmalsvektor (VC) jedes Pixels jeder Mikro-Vorhersagezone (MZPm(ZUi)) mit einem zuvor geschätzten lokalen statistischen Modell (MZPm(ZUi)-MOD) der Mikro-Vorhersagezone (MZPm(ZUi)) der Flächeneinheit (ZUi), nachfolgend bezeichnet als lokales Modell (MZPm(ZUi)-MOD), mittels eines statistischen Vorhersagealgorithmus (ALG_PRED) derart zu vergleichen, dass ein Anomalieindex für jedes Pixel jeder Mikro-Vorhersagezone (MZPm(ZUi)) bestimmt wird, um eine Anomalie-Mikrokarte jeder Mikro-Vorhersagezone (MZPm(ZUi)) der Flächeneinheit (ZUi) zu bilden, wobei die Kombination der Anomalie-Mikrokarten einer Flächeneinheit (ZUi) eine Anomaliekarte der Flächeneinheit (ZUi) bildet,

- wobei jedes lokale Modell (MZPm(ZUi)-MOD) einer Mikro-Vorhersagezone (MZPm(ZUi)) aus den Merkmalsvektoren der Pixel mindestens eines markierten Merkmalsbildes (IMCA) erhalten wurde, das für eine Flächeneinheit (ZUi) mindestens eines Luftfahrt-Lernbauteils (2_APP) repräsentativ ist, das dem zu prüfenden Luftfahrtteil (2) entspricht, wobei die Flächeneinheit mindestens eines Luftfahrt-Lernbauteils (2_APP) der Flächeneinheit (ZUi) des zu prüfenden Luftfahrtteils (2) entspricht;

- wobei das lokale Modell (MZPm(ZUi)-MOD) einer Mikro-Vorhersagezone (MZPm) mittels eines Lernalgorithmus (ALG_APP) aus den Merkmalsvektoren der Pixel einer Mikro-Lernzone (MZAm) des markierten Merkmalsbildes (IMCA) erhalten wird, wobei das markierte Merkmalsbild (IMCA) in Mikro-Vorhersagezonen MZPm(ZUi) analog zu zuvor partitioniert wird, wobei jede Mikro-Vorhersagezone (MZPm) des markierten Merkmalsbildes (IMCA) in einer Mikro-Lernzone (MZAm) des markierten Merkmalsbildes (IMCA) enthalten ist.

## Claims

1. Method for non-destructive inspection of an aeronautical component (2) comprising:

• a step of obtaining (E10), by means of an active infrared thermography system (3), a plurality of digital images of a unit zone (ZUi) of the aeronautical component (2) acquired at a plurality of acquisition instants defined over a determined time period, designated acquisition period, each pixel of a digital image acquired at an acquisition instant having an amplitude at this acquisition instant at a point of the aeronautical component (2); the aeronautical component (2) being fixedly positioned and an acquisition device (3B) of the active infrared thermography system is displaced to acquire a plurality of digital images of each unit zone (ZUi), each position of the acquisition device (3B) corresponding to each unit zone (ZUi),

• a step of estimating (E20), from the acquired digital images of the unit zone (ZUi), an image of characteristics (IMC) representative of the unit zone (ZUi), each pixel of the image of characteristics (IMC) comprising a vector of characteristics (VC),

• a step of partitioning (E30) the image of characteristics (IMC) into a plurality of prediction micro-zones (MZPm(ZUi)), each prediction micro-zone (MZPm(ZUi)) comprising a plurality of pixels,

• a step of comparing (E40) the vector of characteristics (VC) of each pixel of each prediction micro-zone (MZPm(ZUi)) with a local statistical model estimated beforehand (MZPm(ZUi)-MOD) of said prediction micro-zone (MZPm(ZUi)) of said unit zone (ZUi), designated hereafter local model (MZPm(ZUi)-MOD), by means of a statistical prediction algorithm (ALG_PRED) so as to determine an abnormality index for each pixel of each prediction micro-zone (MZPm(ZUi)) in order to form an abnormality micro-map of each prediction micro-zone (MZPm(ZUi)) of said unit zone (ZUi), the assembly of the abnormality micro-maps of a unit zone (ZUi) forming an abnormality map of said unit zone (ZUi),

• each local model (MZPm(ZUi)-MOD) of a prediction micro-zone (MZPm(ZUi)) having been obtained from the vectors of characteristics of the pixels of at least one annotated image of characteristics (IMCA) representative of a unit zone of at least one learning aeronautical component (2_APP) corresponding to the aeronautical component (2) to inspect, the unit zone of at least one learning aeronautical component (2_APP) corresponding to the unit zone (ZUi) of the aeronautical component (2) to inspect;

• the local model (MZPm(ZUi)-MOD) of a prediction micro-zone (MZPm(ZUi)) being obtained by means of a learning algorithm (ALG_APP) from the vectors of characteristics of the pixels of a learning micro-zone (MZAm) of the annotated image of characteristics (IMCA), the annotated image of characteristics (IMCA) being partitioned into prediction micro-zones in a manner analogous to previously, each prediction micro-zone of the annotated image of characteristics (IMCA) being included in a learning micro-zone of the annotated image of characteristics (MZAm).

2. Method according to claim 1, comprising a step of comparing the abnormality index of each pixel of each prediction micro-zone (MZPm) with a predetermined threshold in order to form a binary prediction mask (MDP) of said unit zone (ZUi).

3. Method according to one of claims 1 and 2, wherein each prediction micro-zone (MZPm) is centered with respect to the learning micro-zone (MZAm) in which it is included.

4. Method according to one of claims 1 to 3, wherein each prediction micro-zone (MZPm) has a dimension less than the dimension of the learning micro-zone (MZAm) in which it is included.

5. Method according to claim 4, wherein the prediction micro-zone (MZPm) and the learning micro-zone (MZAm) are concentric.

6. Method according to one of claims 1 to 5, wherein the prediction micro-zone (MZPm) has a first radius (rP) and the learning micro-zone (MZAm) has a second radius (rA) which is greater than or equal to two times the first radius (rP).

7. Method according to one of claims 1 to 6, wherein the learning algorithm (ALG_APP) is an incremental statistical algorithm so as to enable dynamic updating.

8. Method according to claim 7, wherein the learning algorithm (ALG_APP) is a statistical algorithm of FISVDD (Fast Incremental Support Vector Data Description) type.

9. Method according to one of claims 1 to 8, comprising a step of analysis of the abnormality map by an operator, a step of annotation of the prediction micro-zone (MZPm(ZUi)), if it contains suspect pixels in the sense of the prediction algorithmic, by said operator and a step of updating the local model (MZPm(ZUi)-MOD) of said prediction micro-zone (MZPm(ZUi)) from said annotated prediction micro-zone (MZPm(ZUi)) and the learning algorithm (ALG_APP).

10. System (1) for non-destructive inspection of an aeronautical component (2) comprising:

• an active infrared thermography system (3) comprising an excitation device (3A) and an acquisition device (3B) configured to acquire at a plurality of acquisition instants defined over a determined time period, designated acquisition period, digital images of a unit zone (ZUi) of the aeronautical component, each pixel of a digital image acquired at an acquisition instant having an amplitude at this acquisition instant at a point of the aeronautical component after excitation of the aeronautical component (2) by the excitation device (3A); the aeronautical component (2) being fixedly positioned and the acquisition device (3B) of the active infrared thermography system being configured to be displaced to acquire a plurality of digital images of each unit zone (ZUi), each position of the acquisition device (3B) corresponding to each unit zone (ZUi),

• an estimation device (4) configured to estimate, from the acquired digital images of the unit zone (ZUi), an image of characteristics (IMC) representative of the unit zone (ZUi), each pixel of the image of characteristics (IMC) comprising a vector of characteristics (VC),

• a detection device (5) configured to:

• partition an image of characteristics (IMC) into a plurality of prediction micro-zones (MZPm), each prediction micro-zone MZPm(ZUi) comprising a plurality of pixels,

• compare the vector of characteristics (VC) of each pixel of each prediction micro-zone (MZPm(ZUi)) with a local statistical model estimated beforehand (MZPm(ZUi)-MOD) of said prediction micro-zone (MZPm(ZUi)) of said unit zone (ZUi), designated hereafter local model (MZPm(ZUi)-MOD), by means of a statistical prediction algorithm (ALG_PRED) so as to determine an abnormality index for each pixel of each prediction micro-zone (MZPm(ZUi)) in order to form an abnormality micro-map of each prediction micro-zone (MZPm(ZUi)) of said unit zone (ZUi), the assembly of the abnormality micro-maps of a unit zone (ZUi) forming an abnormality map of said unit zone (ZUi),

• each local model (MZPm(ZUi)-MOD) of a prediction micro-zone (MZPm(ZUi)) having been obtained from the vectors of characteristics of the pixels of at least one annotated image of characteristics (IMCA) representative of a unit zone (ZUi) of at least one learning aeronautical component (2_APP) corresponding to the aeronautical component (2) to inspect, the unit zone of at least one learning aeronautical component (2_APP) corresponds to the unit zone (ZUi) of the aeronautical component (2) to inspect;

• the local model (MZPm(ZUi)-MOD) of a prediction micro-zone (MZPm) being obtained by means of a learning algorithm (ALG_APP) from the vectors of characteristics of the pixels of a learning micro-zone (MZAm) of the annotated image of characteristics (IMCA), the annotated image of characteristics (IMCA) being partitioned into prediction micro-zones MZPm(ZUi) in a manner analogous to previously, each prediction micro-zone (MZPm) of the annotated image of characteristics (IMCA) being included in a learning micro-zone (MZAm) of the annotated image of characteristics (IMCA).

[Fig. 1]

FIG. 1

[Fig. 2]

FIG. 2

[Fig. 3]

FIG. 3

[Fig. 4]

```
┌─────────────┐
│     E10     │
└─────────────┘
       │
       ▼
┌─────────────┐
│     E20     │
└─────────────┘
       │
       ▼
┌─────────────┐
│     E30     │
└─────────────┘
       │
       ▼
┌─────────────┐
│     E40     │
└─────────────┘
       │
       ▼
┌─────────────┐
│     E50     │
└─────────────┘
```

## FIG. 4

[Fig. 5A]

## FIG. 5A

[Fig. 5B]

DB-MOD

FIG. 5B

MZP1(ZU1)-MOD

...

MZP2(ZU1)-MOD

...

MZPm(ZUi)-MOD

...

[Fig. 6]

MZPj(ZUi)

MZP3(ZUi)-MOD

ALG_PRED

E40

PIX SAIN     PIX NSAIN

FIG. 6

[Fig. 7]

V(ZUi)

DEC-MOD

E20

IMC (ZUi)

E30

MZP

MZP(ZU)-MOD → ALG_PRED — E40

SAIN / NSAIN

CDP / MDP

E50

## FIG. 7

[Fig. 8]

MZP1(ZU1)          MZP2(ZU1)

NSAIN          NSAIN

MDP

NSAIN

MZP3(ZU1)          MZP4(ZU1)

## FIG. 8

[Fig. 9]

FIG. 9

[Fig. 10]

FIG. 10

[Fig. 11]

MZP     MZA

rA     d

rP

## FIG. 11

[Fig. 12A]

ZU    MZA1    ZU      IMCA(ZU1)(E1)

MZP1

## FIG. 12A

[Fig. 12B]

FIG. 12B

[Fig. 12C]

FIG. 12C

[Fig. 13]

$MZP_m(ZU)$

$MZP_{m+1}(ZU)$

ALG_PRED

MZP(ZU)-MOD

SAIN

NSAIN

ALG_APP

OP

NSAIN

SAIN

FIG. 13

**EP 4 118 616 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3071611
- US 2005008215 A1
- CN 110322429 A
- US 10546207 B2
- US 9519844 B1
- US 8287183 B2
- FR 3071611 A1

### Littérature non-brevet citée dans la description

- **H. JIANG** ; **H. WANG** ; **W. HU** ; **D. KAKDE** ; **A. CHAUDHURI**. *Fast Incremental SVDD Learning Algorithm with the Gaussian Kernel*, https://www.researchgate.net/publication/319463824_Fast_Incremental_SVDD_Lear ning_Algorithm_with_the_-Gaussian_Kernel